# EUROPEAN PATENT APPLICATION

(11) **EP 4 783 262 A1**
(43) Date of publication of application: **29.07.2026**
(21) Application number: 24882881.6
(22) Date of filing: 24.10.2024
(51) Int. Cl.: H01M 4/525, H01M 4/505, C01G 53/00, H01M 4/02

(54) **POSITIVE ELECTRODE MATERIAL AND METHOD FOR MANUFACTURING SAME**

(30) Priority: 25.10.2023 KR 20230144119
(71) Applicant: LG Chem, Ltd., Seoul 07336 (KR)
(72) Inventor: KWAK, No Woo, Daejeon 34122 (KR); EOM, Jun Ho, Daejeon 34122 (KR); YOON, Jong Seol, Daejeon 34122 (KR); PARK, Yoon Bin, Daejeon 34122 (KR); RHEE, Tae Young, Daejeon 34122 (KR); SON, Sang Woo, Daejeon 34122 (KR); OH, Myoung Hwan, Daejeon 34122 (KR); LEE, Min Joon, Daejeon 34122 (KR); LEE, Jae Sang, Daejeon 34122 (KR); AHN, Jun Tae, Daejeon 34122 (KR)
(74) Representative: Hoffmann Eitle
(86) International application number: PCT/KR2024/016348
(87) International publication number: WO 2025/089854

(57) **Abstract**

The present invention relates to a positive electrode material including a single particle positive electrode active material and a method for preparing the same, and is characterized in that a region of high Mn concentration is observed in the single particle positive electrode active material, as analyzed by EPMA.

## Description

### TECHNICAL FIELD

### Cross-reference to Related Applications

This application claims the benefit of Korean Patent Application No. 10-2023-0144119, filed on October 25, 2023, in the Korean Intellectual Property Office, the disclosure of which is incorporated herein in its entirety by reference.

### Technical Field

The present invention relates to a positive electrode material and a method for preparing the same.

### BACKGROUND ART

Lithium secondary batteries, which are capable of repeated charging and discharging, are gaining prominence as an alternative to fossil energy. These lithium secondary batteries have been primarily used in traditional handheld devices such as mobile phones, video cameras, and power tools. However, there is a growing trend of lithium secondary batteries being used in applications like electric vehicles (EVs, HEVs, PHEVs), large-scale energy storage systems (ESS), and uninterruptible power supplies (UPS). The lithium secondary batteries are provided with an electrode assembly including a stack of unit cells, each unit cell having a structure in which positive and negative electrode plates, with active materials applied onto current collectors, are disposed with a separator therebetween, and an outer casing, or battery case, for hermetically sealing the electrode assembly together with an electrolyte.

Lithium composite transition metal oxides are used as positive electrode active materials for lithium secondary batteries, with lithium cobalt oxide (LiCoO₂), lithium manganese oxide (LiMnO₂ or LiMnO₄), lithium iron phosphate compound (LiFePO₄), or lithium nickel oxide (LiNiO₂) being the most common. In addition, approaches to mitigate the poor thermal stability of LiNiO₂ without hurting its superior reversible capacity use nickel-manganese-based lithium composite metal oxides in which nickel is partially substituted with manganese having excellent thermal stability, and NCM in which nickel is partially substituted with manganese and cobalt, or NCMA in which Al is added to NCM to enhance battery output and stability.

A typical method for synthesizing NCMA single particle positive electrode active materials involves mixing Al raw materials with NCM precursors synthesized via co-precipitation and then heat-treating the mixture. This approach, however, incurs additional manufacturing costs and environmental concerns due to the required precursor processing, washing, and drying. Consequently, there is a need to develop new manufacturing methods for positive electrode active materials to enhance price competitiveness and comply with environmental regulations.

Meanwhile, typical positive electrode active material particles are polycrystalline multiparticle materials having the form of secondary particles composed of aggregated primary particles. Secondary particles are defined as larger, physically distinct particles formed by the aggregation of primary particles, small individual units. The typical positive electrode active material particles exhibit a large specific surface area and low particle strength. This morphology, in particular, exhibits a large contact area with an electrolyte, leading to significant thermal degradation upon repeated charge/discharge cycles and cracking formation resulting in exposure of new surfaces, thereby exacerbating gas generation from side reactions. Accordingly, there has been a demand in the industry for single particle positive electrode active materials.

### [Prior Art Documents]

### [Patent Document]

(Patent Document 0001) KR 10-1937926 B1

### DISCLOSURE OF THE INVENTION

### TECHNICAL PROBLEM

An aspect of the present invention provides a positive electrode material exhibiting enhanced lifespan characteristics and stability.

### TECHNICAL SOLUTION

(1) According to an aspect of the present invention, provided is a positive electrode material including a positive electrode active material in the form of a single particle, wherein when a cross-section of the positive electrode including the positive electrode material is measured by EPMA under conditions of an acceleration voltage of 15 kV and a probe current of 50 nA, a region of high Mn concentration present on a cross-section of the positive electrode active material is observed in an EPMA image, and the region of high Mn concentration is, under the following conditions: a maximum value (max) of a Mn concentration scale bar in the EPMA image is set to a Mn mol% value of the positive electrode active material analyzed by inductive coupled plasma (ICP); and a minimum value (min) of a Mn concentration scale bar in the EPMA image is set to a value derived from Mn mol% of the positive electrode active material analyzed by ICP, divided by 3 and discarding the fractional part from the first decimal place, defined as a region exhibiting Mn concentration % at or above a point where the maximum value (max) and the minimum value (min) are internally divided in a ratio of 1:1 with respect to the Mn concentration scale bar in the EPMA image.
(2) The present invention provides the positive electrode material according to (1) above, wherein the region of high Mn concentration has an area ratio of 1/100 or greater compared to a cross-sectional area of one positive electrode active material particle in which the region of high Mn concentration is observed.
(3) The present invention provides the positive electrode material according to (1) or (2) above, wherein the region of high Mn concentration is distributed on a surface and/or in the interior of the positive electrode active material.
(4) The present invention provides the positive electrode material according to any one of (1) to (3) above, wherein the region of high Mn concentration is distributed in the interior of the positive electrode active material.
(5) The present invention provides the positive electrode material according to any one of (1) to (4) above, wherein the positive electrode active material has an average particle size (D₅₀) of 1 µm to 15 µm.
(6) The present invention provides the positive electrode material according to any one of (1) to (5) above, wherein the positive electrode active material includes a lithium composite transition metal oxide represented by Formula 1 below.

   [Formula 1] Li_{w}NiₓCo_{y}Mn_{z}M¹_{1-x-y-z}O₂

   In Formula 1 above, M¹ is at least one selected from the group consisting of B, F, Mg, Si, P, Ca, Sc, Ti, V, Cr, Fe, Ga, Sr, Y, Zr, Nb, Mo, Ba, La, Hf, Ta, W, Bi, Ce, Sm, and Gd, and
   w, x, y, and z satisfy 0.8≤w≤1.2, 0.5≤x<1.0, 0≤y≤0.2, and 0<z≤0.4.
(7) The present invention provides the positive electrode material according to any one of (1) to (6) above, wherein the positive electrode active material includes a lithium composite transition metal oxide represented by Formula 2 below.

   [Formula 2] LiₐNi_{b}Co_{c}Mn_{d}AlₑM²_{f}O₂

   In Formula 2 above, M² is at least one selected from the group consisting of B, F, Mg, Si, P, Ca, Sc, Ti, V, Cr, Fe, Ga, Sr, Y, Zr, Nb, Mo, Ba, La, Hf, Ta, W, Bi, Ce, Sm, and Gd, and
   a, b, c, d, e, and f satisfy 0.8≤a≤1.2, 0.5≤b<1.0, 0≤c≤0.2, 0<d≤0.4, 0≤e≤0.1, 0≤f≤0.1, and b+c+d+e+f = 1.

### ADVANTAGEOUS EFFECTS

According to the present invention, a positive electrode material exhibits enhanced lifespan characteristics and stability.

### BRIEF DESCRIPTION OF THE DRAWINGS

FIG. 1 shows an image from EPMA measurement on an electrode including a positive electrode active material prepared in Example 1.
FIG. 2 shows an image from EPMA measurement on an electrode including a positive electrode active material prepared in Example 2.
FIG. 3 shows an image from EPMA measurement on an electrode including a positive electrode active material prepared in Example 3.
FIG. 4 shows an image from EPMA measurement on an electrode including a positive electrode active material prepared in Example 4.
FIG. 5 shows an image from EPMA measurement on an electrode including a positive electrode active material prepared in Example 5.
FIG. 6 shows an image from EPMA measurement on an electrode including a positive electrode active material prepared in Example 6.
FIG. 7 shows an image from EPMA measurement on an electrode including a positive electrode active material prepared in Example 7.
FIG. 8 shows an image from EPMA measurement on an electrode including a positive electrode active material prepared in Example 8.
FIG. 9 shows an image from EPMA measurement on an electrode including a positive electrode active material prepared in Example 9.
FIG. 10 shows an image from EPMA measurement on an electrode including a positive electrode active material prepared in Example 10.
FIG. 11 shows an image from EPMA measurement on an electrode including a positive electrode active material prepared in Example 11.
FIG. 12 shows an image from EPMA measurement on an electrode including a positive electrode active material prepared in Example 12.
FIG. 13 shows an image from EPMA measurement on an electrode including a positive electrode active material prepared in Example 13.
FIG. 14 shows an image from EPMA measurement on an electrode including a positive electrode active material prepared in Comparative Example 1.
FIG. 15 shows an image from EPMA measurement on an electrode including a positive electrode active material prepared in Comparative Example 2.
FIG. 16 shows an image from EPMA measurement on an electrode including a positive electrode active material prepared in Comparative Example 3.
FIG. 17 shows an image from EPMA measurement on an electrode including a positive electrode active material prepared in Comparative Example 4.

### MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present invention, the expression 'primary particle' denotes a smallest particle unit which is distinguished as one body when a cross-section of a positive electrode active material is observed through a scanning electron microscope (SEM), and may be composed of a plurality of grains.

In the present invention, the expression 'secondary particle' denotes a secondary structure formed by aggregation of a plurality of primary particles. An average particle size of the secondary particle may be measured using a particle size analyzer.

As used herein, the term 'form of a single particle' may be used interchangeably with the term "single particle type," and indicates a shape that contrasts with a secondary particle shape formed by aggregation of hundreds of primary particles prepared through a typical method. In addition, the term 'single particle type positive electrode active material' or 'lithium transition metal oxide in the form of a single particle' as used herein is a concept that contrasts with a positive electrode active material in the form of a secondary particle formed by aggregation of hundreds of primary particles prepared through a typical method, and indicates a positive electrode active material or a lithium transition metal active material consisting of 1-100 particles, 1-80 particles, 1-60 particles, 1-40 particles, 1-20 particles, 1-10 particles, or 1-5 particles. The 'single particle' indicates the smallest unit of particles recognized when the positive electrode active material is observed through a scanning electron microscope.

The term 'average particle size (D₅₀)' in the present invention denotes a particle size at 50% of cumulative distribution of volume according to the particle size. After dispersing measurement target powder in a dispersion medium, the dispersion medium is introduced into a commercial laser diffraction particle size measurement instrument (e.g., S3500 from Microtrac), a particle size distribution is calculated by measuring a difference in diffraction patterns due to a particle size when particles pass through a laser beam, and the D₅₀ may be measured by calculating a particle size at 50% of the cumulative distribution of volume according to the particle size using the measurement instrument.

### <Positive electrode material>

The present invention provides a positive electrode material.

The positive electrode material of the present invention is a positive electrode material including a positive electrode active material in the form of a single particle. When a cross-section of the positive electrode comprising the positive electrode material is measured by EPMA under conditions of an acceleration voltage of 15 kV and a probe current of 50 nA, a region of high Mn concentration present on a cross-section of the positive electrode active material is observed in an EPMA image, and the region of high Mn concentration is, under conditions that a maximum value (max) of a Mn concentration scale bar in the EPMA image is set to a Mn mol% value of the positive electrode active material analyzed by inductive coupled plasma (ICP), and a minimum value (min) of a Mn concentration scale bar in the EPMA image is set to a value derived from Mn mol% of the positive electrode active material analyzed by ICP, divided by 3 and discarding the fractional part from the first decimal place, a region exhibiting Mn concentration % at or above a point where the maximum value (max) and the minimum value (min) are internally divided in a ratio of 1:1 with respect to the Mn concentration scale bar in the EPMA image.

The inventors of the present invention found that as a method for preparing a positive electrode material, which will be described later, when a region of high Mn concentration is present inside a positive electrode active material in the form of a single particle, the same effect as coating or doping a portion of a surface or region of the positive electrode active material in the form of a single particle is exhibited, thereby enhancing lifespan characteristics and stability, completing the present invention.

According to an embodiment of the present invention, the region of high Mn concentration does not indicate a region in which a Mn concentration value is at or above a certain fixed concentration value regardless of the composition of the positive electrode active material, but indicate a region in which Mn elements are more densely packed inside the positive electrode active material in the form of a single particle than in a surrounding region through the method for preparing a positive electrode material, which will be described later, and thus Mn concentration is relatively greater inside the positive electrode active material in the form of a single particle than in other surrounding regions. Specifically, the region of high Mn concentration is identified by measuring a cross-section of an electrode containing a positive active material using EPMA, and may be defined as a region exhibiting Mn concentration % at or above a point where a maximum value (max) and a minimum value (min) are internally divided in a ratio of 1:1 with respect to a Mn concentration scale bar in an EPMA image, under conditions that the maximum value (max) of the Mn concentration scale bar in the EPMA image is set to a Mn mol% value of the positive electrode active material analyzed by inductive coupled plasma (ICP), and the minimum value (min) of the Mn concentration scale bar in the EPMA image is set to a value derived from Mn mol% of the positive electrode active material analyzed by ICP, divided by 3 and discarding the fractional part from the first decimal place.

As used herein, when the maximum value (max) and the minimum value (min) are divided internally in a ratio of a:b, a length from the maximum value (max) to the point of internal division to a length from the minimum value (min) to the point of internal division is a:b. According to an embodiment of the present invention, the region of high Mn concentration may be defined as a region exhibiting Mn concentration % at or above a point where the maximum value (max) and the minimum value (min) are internally divided in a ratio of 1:1.02, 1:1.04, 1:1.06, 1:1.08, 1:1.1, 1:1.12, 1:1.14, 1:1.16, 1:1.18, 1:1.2, 1:1.22, 1:1.24, 1:1.26, 1:1.28, or 1:1.3 with respect to the Mn concentration scale bar on the EPMA image. When the above-described range is satisfied, the same effect as coating a portion of the surface or doping an internal region of a single particle positive electrode active material may be exhibited, resulting in enhanced lifespan characteristics and stability.

According to an embodiment of the present invention, the ICP analysis may be performed by using an inductively coupled plasma optical emission spectrometer (ICP-OES; PerkinElmer, Optima 8000DV).

According to an embodiment of the present invention, the maximum value (max) of the Mn concentration scale bar in the EPMA image is a Mn mol% value of the positive electrode active material analyzed ICP, and the minimum value (min) of the Mn concentration scale bar in the EPMA image is a value derived from Mn mol% of the positive electrode active material analyzed by ICP, divided by 3 and discarding the fractional part from the first decimal place. As such, by specifying the maximum (max) and minimum (min) values of the Mn concentration scale bar in the EPMA image, Mn concentration distributed in the cross-section of the positive electrode active material on the EPMA image may be easily measured, and the region of high Mn concentration in the positive electrode active material may be observed regardless of the composition of the positive electrode active material. Specifically, in the EPMA image according to an embodiment of the present invention, the maximum value (max) and minimum value (min) of the Mn concentration scale bar may vary depending on the Mn composition of the positive electrode active material, and thus the region of high Mn concentration in the positive electrode active material may be observed regardless of the composition of the positive electrode active material.

When the maximum value (max) and minimum value (min) of the Mn concentration scale bar are fixed regardless of the composition of the positive electrode active material, observing the region of high Mn concentration may be difficult with lower Mn composition of the positive electrode active material. For example, when an EPMA image is obtained under conditions that the maximum value (max) of the Mn concentration scale bar is fixed to 15 concentration % and the minimum value (min) is fixed to 0 concentration %, a positive electrode active material with a Mn mol% of 1 or less is observed only in a portion of the Mn concentration scale bar, and thus the region of high Mn concentration may not be observed. The present invention involves adjusting the maximum value (max) and minimum value (min) of the Mn concentration scale bar on an EPMA image according to the composition of the positive electrode active material and thus observing a relative Mn concentration distribution in a positive electrode active material regardless of the composition of the positive electrode active material.

According to an embodiment of the present invention, the region of high Mn concentration has an area ratio of 1/100 or greater compared to a cross-sectional area of one positive electrode active material particle in which the region of high Mn concentration is observed, and for specific examples, may have an area ratio of 1/90 or greater, 1/70 or greater, 1/50 or greater, 1/30 or greater, or 1/10 or greater.

According to an embodiment of the present invention, the Mn concentration in the region defined as the region of high Mn concentration may have Mn concentration % at or above a point where the maximum value (max) and the minimum value (min) of the scale bar in the EPMA image adjusted according to the composition of the positive electrode active material are internally divided in a ratio of 1:1 as described above.

According to an embodiment of the present invention, the region of high Mn concentration may be observed as one or more on the cross-section of the positive electrode active material, and when a cross-section of a positive electrode formed of a positive electrode material including a plurality of positive electrode active materials is analyzed by EPMA under the conditions described above, the region may be observed dispersedly on the EPMA image.

According to an embodiment of the present invention, in addition to the region of high Mn concentration, on the cross-section of the positive electrode active material, a region having Mn concentration % less than a point where the maximum value (max) and the minimum value (min) of the scale bar of the EPMA image adjusted according to the composition of the positive electrode active material are internally divided in a ratio of 1:1 as described above may be further observed.

According to an embodiment of the present invention, when a plurality of high Mn concentration regions are observed, a region having Mn concentration % less than the point where the maximum value (max) and the minimum value (min) of the scale bar of the EPMA image adjusted according to the composition of the positive electrode active material are internally divided in a ratio of 1:1 as described above is present between each region of high Mn concentration, thereby distinguishing the regions.

According to an embodiment of the present invention, the region of high Mn concentration may be defined only among positive electrode active materials having the same composition and crystal structure. For example, in the case of a positive electrode material in which different types of positive electrode active materials having different compositions and/or crystal structures are blended, the region of high Mn concentration may be defined only in relation to one type of positive electrode active materials having the same composition and crystal structure in the positive electrode material.

According to an embodiment of the present invention, the region of high Mn concentration formed in the single particle positive electrode active material through the method for preparing a positive electrode material, which will be described later, is not only present on the surface of the positive electrode active material but also inside the positive electrode active material, and the region of high Mn concentration may be distributed not only on the surface of the positive electrode active material but also inside the positive electrode active material.

Specifically, the fact that the positive electrode active material according to an embodiment of the present invention includes the region of high Mn concentration may involve a case where the region of high Mn concentration is distributed on the surface of the positive electrode active material, a case where the region of high Mn concentration is distributed inside the positive electrode active material, and a case where the region of high Mn concentration is distributed on the surface and inside the positive electrode active material.

According to an embodiment of the present invention, the positive electrode active material may include a lithium composite transition metal oxide represented by Formula 1 below.

[Formula 1] Li_{w}NiₓCo_{y}Mn_{z}M¹_{1-x-y-z}O₂

In Formula 1 above, M¹ is at least one selected from the group consisting of B, F, Mg, Si, P, Ca, Sc, Ti, V, Cr, Fe, Ga, Sr, Y, Zr, Nb, Mo, Ba, La, Hf, Ta, W, Bi, Ce, Sm, and Gd, and
w, x, y, and z satisfy 0.8≤w≤1.2, 0.5≤x<1.0, 0≤y≤0.2, and 0<z≤0.4.

In addition, the lithium composite transition metal oxide may specifically be a lithium composite transition metal oxide represented by Formula 2 below.

[Formula 2] LiₐNi_{b}Co_{c}Mn_{d}AlₑM²_{f}O₂

In Formula 2 above, M² is at least one selected from the group consisting of B, F, Mg, Si, P, Ca, Sc, Ti, V, Cr, Fe, Ga, Sr, Y, Zr, Nb, Mo, Ba, La, Hf, Ta, W, Bi, Ce, Sm, and Gd, and
a, b, c, d, e, and f satisfy 0.8≤a≤1.2, 0.5≤b<1.0, 0≤c≤0.2, 0<d≤0.4, 0≤e≤0.1, 0≤f≤0.1, and b+c+d+e+f = 1.

a indicates a molar ratio of lithium in a lithium composite transition metal oxide, and may range from 0.8 to 1.2, and as specific examples, may be 0.84 or greater, 0.88 or greater, 0.92 or greater, 0.96 or greater, or 1.00 or greater, and further may be 1.18 or less, 1.16 or less, 1.14 or less, 1.12 or less, 1.10 or less, 1.08 or less, 1.06 or less, or 1.04 or less.

b indicates a molar ratio of nickel in a lithium composite transition metal oxide, and may range from 0.5 or greater and less than 1.0, and as specific examples, may be 0.55 or greater, 0.60 or greater, 0.65 or greater, 0.70 or greater, or 0.75 or greater, and further may be 0.98 or less, 0.96 or less, 0.94 or less, 0.92 or less, 0.90 or less, or 0.88 or less.

c indicates a molar ratio of cobalt in a lithium composite transition metal oxide, and may range from 0 to 0.2, and as specific examples, may be 0.001 or greater, 0.005 or greater, 0.01 or greater, 0.02 or greater, or 0.04 or greater, and further may be 0.18 or less, 0.16 or less, 0.14 or less, 0.12 or less, 0.1 or less, or 0.05 or less.

d indicates a molar ratio of manganese in a lithium composite transition metal oxide, and may range from greater than 0 and 0.4 or less, and as specific examples, may be 0.01 or greater, 0.03 or greater, 0.05 or greater, 0.7 or greater, or 0.09 or greater, and further may be 0.35 or less, 0.3 or less, 0.25 or less, 0.2 or less, 0.15 or less, or 0.1 or less.

e indicates a molar ratio of aluminum in a lithium composite transition metal oxide, and may range from 0 to 0.1, and as specific examples, may be 0.005 or greater, 0.01 or greater, 0.015 or greater, 0.02 or greater, or 0.025 or greater, and further may be 0.097 or less, 0.094 or less, 0.09 or less, 0.087 or less, 0.084 or less, or 0.08 or less.

f indicates a molar ratio of M² in a lithium composite transition metal oxide, and may range from 0 to 0.1, and as specific examples, may be 0.005 or greater, 0.01 or greater, 0.015 or greater, 0.02 or greater, or 0.025 or greater, and further may be 0.097 or less, 0.094 or less, 0.09 or less, 0.087 or less, 0.084 or less, or 0.08 or less.

According to an embodiment of the present invention, the positive electrode material may have an average particle size (D₅₀) of 1.5 µm or greater, 2 µm or greater, 3 µm or greater, 4 µm or greater, or 5 µm or greater, and an average particle size (D₅₀) of 13 µm or less, 11 µm or less, 9 µm or less, 8 µm or less, or 7 µm or less.

According to an embodiment of the present invention, a positive electrode active material included in the positive electrode material may further include a coating layer disposed on a surface of a lithium composite transition metal oxide. The coating layer may include at least any one selected from the group consisting of Li, Ni, Co, Mn, B, F, Mg, Al, Si, P, Ca, Sc, Ti, V, Cr, Fe, Ga, Sr, Y, Zr, Nb, Mo, Ba, La, Hf, Ta, W, Bi, Ce, Sm, and Gd.

### <Method for preparing positive electrode material>

The present invention provides a method for preparing a positive electrode material.

The method for preparing a positive electrode material includes mixing a lithium raw material and a transition metal raw material (S1); and
firing the mixture mixed in step (S1) at a temperature of 700 °C to 1200 °C. The step (S2) is performed including a step of (S2-1-1): first firing at a first temperature, a step of (S2-1-2): cooling the first fired product fired in step (S2-1-1), and a step of (S2-1-3): second firing the first fired product cooled in step (S2-1-2) at a second temperature different from the first temperature, or performed including a step of (S2-2-1): first firing at a third temperature, and a step of (S2-2-2): second firing consecutively following the first firing of step (S2-2-1), at a fourth temperature different from the third temperature.

The method for preparing a positive electrode material according to an embodiment of the present invention is based on a solid state synthesis method involving mixing solid state raw materials of each element forming a positive electrode active material and firing the mixture to vaporize and remove inorganic substances contained in the raw materials, thereby forming oxides. Accordingly, compared to a typical method for preparing a single particle positive electrode active material based on a precursor synthesized through co-precipitation, the method according to an embodiment of the present invention may prevent additional manufacturing costs and environmental concerns involving precursor processing and washing/drying, and provide the same effect as coating a portion of a surface or doping an internal region of the positive electrode active material due to the formation of a region of high Mn concentration in the single particle positive electrode active material, leading to enhanced lifespan characteristics and stability.

The method for preparing a positive electrode material according to an embodiment of the present invention includes mixing a lithium raw material and a transition metal raw material (S1).

According to an embodiment of the present invention, the lithium raw material may be at least one selected from the group consisting of lithium hydroxide (LiOH), lithium hydroxide hydrate (LiOH ·H₂O), and lithium carbonate (Li₂CO₃).

According to an embodiment of the present invention, the transition metal raw material may indicate a solid-state raw material of each of Ni, Co, and Mn of Formula 1 above, or a combination of two thereof (e.g., a combination of Ni and Co, a combination of Ni and Mn, a combination of Co and Mn). The transition metal raw material according to an embodiment of the present invention is different from a typical precursor synthesized through co-precipitation, in which Ni, Co, and Mn are all included in one compound. Specifically, the transition metal raw material may be at least one of the following forms of Ni, Co, and Mn, or a combination of two thereof: metal, hydroxide, oxide, carbonate, sulfate, sulfide, phosphate, nitrate, chloride, and acetate.

According to an embodiment of the present invention, the transition metal raw material may have an average particle size (D₅₀) of 0.1 µm to 15 by volume, and may specifically have an average particle size (D₅₀) of 0.2 µm or greater, 0.5 µm or greater, 1.0 µm or greater, 1.5 µm or greater, or 2.0 µm or greater, and an average particle size (D₅₀) of 13 µm or less, 10 µm or less, 8 µm or less, 6 µm or less, or 4 µm or less.

According to an embodiment of the present invention, the step (S1) may additionally add and mix a doping element raw material, in addition to the lithium raw material and the transition metal raw material.

In this case, the doping element raw material indicates the raw material of M¹ from Formula 1 above, and may be at least one of the following forms: metal, hydroxide, oxide, carbonate, sulfate, sulfide, phosphate, nitrate, chloride, or acetate of M¹.

The method for preparing a positive electrode material according to an embodiment of the present invention includes firing the mixture mixed in step (S1) at a temperature of 700 °C to 1200 °C (S2).

According to an embodiment of the present invention, the step (S2) may be performed as a first method (S2-1) including a step of (S2-1-1): first firing at a first temperature, a step of (S2-1-2): cooling the first fired product fired in step (S2-1-1), and a step of (S2-1-3): second firing the first fired product cooled in step (S2-1-2) at a second temperature.

According to an embodiment of the present invention, the step (S2-1-1) of the first method (S2-1) may be mixing each transition metal raw material including a nickel raw material in an amount such that a molar ratio of nickel (Ni) to the transition metal of the positive electrode active material in step S1 is 50 mol% or greater with a first lithium raw material so that a molar ratio lithium of (Li) to non-lithium (Li) elements included in the positive electrode active material to be prepared is 0.80 to 1.2 times to prepare a first mixture, which is then first fired at a first temperature under an oxygen partial pressure of 10 to 100%.

According to an embodiment of the present invention, the step (S2-1-2) of the first method (S2-1) may be cooling the first fired material fired in step (S2-1-1), and a crushing process of crushing the cooled fired material may be additionally performed.

According to an embodiment of the present invention, the step (S2-1-3) of the first method (S2-1) may be additionally mixing a second lithium raw material with the first fired material cooled in step (S2-1-2) so that a total molar ratio of lithium (Li) to non-lithium (Li) elements included in the positive electrode active material to be prepared is 0.8 to 1.2 times and then firing the resulting product at a second temperature, or second firing the mixture at a second temperature at an oxygen partial pressure of 10 to 100% without adding a separate lithium raw material to the first fired material cooled in step (S2-1-2).

According to an embodiment of the present invention, the first lithium raw material and the second lithium raw material may each be at least one selected from the group consisting of lithium hydroxide (LiOH), lithium hydroxide hydrate (LiOH·H₂O), and lithium carbonate (Li₂CO₃). In addition, the first lithium raw material and the second lithium raw material may be the same as or different from each other.

According to an embodiment of the present invention, in step (S2-1-3), at least one of the doping element raw materials, that is, the form of metal, hydroxide, oxide, carbonate, sulfate, sulfide, phosphate, nitrate, chloride, or acetate of M¹ from Formula 1 above may be additionally added.

In addition, According to an embodiment of the present invention, the doping element raw materials may be separately added in step (S1) and step (S2-1-3).

According to an embodiment of the present invention, the first temperature and the second temperature may be different from each other. In this case, the first temperature and the second temperature may be different, each having a range of 700 °C to 1200 °C.

According to an embodiment of the present invention, the second temperature may be lower than the first temperature. In this case, the first temperature may range from 865 °C to 1200 °C, and the second temperature may range from 700 °C to 860 °C. As a more specific example, the first temperature may be 870 °C or greater, 880 °C or greater, 890 °C or greater, 900 °C or greater, or 910 °C or greater, and further may be 1150 °C or less, 1100 °C or less, 1050 °C or less, 1000 °C or less, or 950 °C or less. Meanwhile, the second temperature may be 710 °C or greater, 720 °C or greater, 730 °C or greater, 740 °C or greater, or 750 °C or greater, and further may be 850 °C or less, 840 °C or less, 830 °C or less, 820 °C or less, or 810 °C.

When the first temperature and the second temperature satisfy the temperature ranges described above, a region of high Mn concentration may be formed in the positive electrode active material in the form of a single particle.

According to an embodiment of the present invention, the first firing may be performed for 2 hours to 30 hours. Specifically, the first firing may be performed for 5 hours or greater, 8 hours or greater, 11 hours or greater, 13 hours or greater, or 15 hours or greater, and may also be performed for 28 hours or less, 26 hours or less, 24 hours or less, 22 hours or less, or 20 hours or less.

According to an embodiment of the present invention, the second firing may be performed for 2 hours to 30 hours. Specifically, the first firing may be performed for 5 hours or greater, 8 hours or greater, 11 hours or greater, 13 hours or greater, or 15 hours or greater, and may also be performed for 28 hours or less, 26 hours or less, 24 hours or less, 22 hours or less, or 20 hours or less.

According to an embodiment of the present invention, the step (S2) may be performed as a second method (S2-2) including a step of (S2-2-1): first firing at a third temperature, and a step of (S2-2-2): second firing consecutively following the first firing of (S2-2-1), at a fourth temperature different from the third temperature. Meanwhile, the performing of the second firing consecutively following the first firing indicates that the second firing is performed immediately following the first firing without a separate process between the first and second firings. That is, it indicates performing a single firing process, but changing the temperature during the firing process.

According to an embodiment of the present invention, the step (S2-2-1) of the second method (S2-2) may be mixing each transition metal raw material including a nickel raw material in an amount such that a molar ratio of nickel (Ni) to the transition metal of the positive electrode active material in step S1 is 50 mol% or greater with a lithium raw material so that a molar ratio of lithium (Li) to non-lithium (Li) elements included in the positive electrode active material to be prepared is 0.80 to 1.2 times to prepare a mixture, which is then fired at a third temperature under an oxygen partial pressure of 10 to 100%.

According to an embodiment of the present invention, the step (S2-2-2) of the second method (S2-2) may be second firing at a fourth temperature different from the third temperature immediately after the first firing of step (S2-2-1) without a separate cooling process.

According to an embodiment of the present invention, the lithium raw material, as described above, may be at least one selected from the group consisting of lithium hydroxide (LiOH), lithium hydroxide hydrate (LiOH·H₂O), and lithium carbonate (Li₂CO₃).

According to an embodiment of the present invention, the third temperature and the fourth temperature may be different from each other. In this case, the third temperature and the fourth temperature may be different, each having a range of 700 °C to 1200 °C.

According to an embodiment of the present invention, the fourth temperature may be greater than the third temperature. In this case, the fourth temperature may be 865 °C to 1200 °C, and the third temperature may be 700 °C to 860 °C. As a more specific example, the fourth temperature may be 870 °C or greater, 880 °C or greater, 890 °C or greater, 900 °C or greater, or 910 °C or greater, and further may be 1150 °C or less, 1100 °C or less, 1050 °C or less, 1000 °C or less, or 950 °C or less. Meanwhile, the third temperature may be 710 °C or greater, 720 °C or greater, 730 °C or greater, 740 °C or greater, or 750 °C or greater, and further may be 850 °C or less, 840 °C or less, 830 °C or less, 820 °C or less, or 810 °C or less.

According to an embodiment of the present invention, the fourth temperature may be lower than the third temperature. In this case, the third temperature may be 865 °C to 1200 °C, and the fourth temperature may be 700 °C to 860 °C. As a more specific example, the third temperature may be 870 °C or greater, 880 °C or greater, 890 °C or greater, 900 °C or greater, or 910 °C or greater, and further may be 1150 °C or less, 1100 °C or less, 1050 °C or less, 1000 °C or less, or 950 °C or less. Meanwhile, the fourth temperature may be 710 °C or greater, 720 °C or greater, 730 °C or greater, 740 °C or greater, or 750 °C or greater, and further may be 850 °C or less, 840 °C or less, 830 °C or less, 820 °C or less, or 810 °C or less.

When the third temperature and the fourth temperature satisfy the temperature ranges described above, a region of high Mn concentration may be formed in the positive electrode active material in the form of a single particle.

According to an embodiment of the present invention, the second method (S2-2) may be performed at the third temperature for 2 hours to 30 hours. Specifically, the first firing may be performed for 5 hours or greater, 8 hours or greater, 11 hours or greater, 13 hours or greater, or 15 hours or greater, and may also be performed for 28 hours or less, 26 hours or less, 24 hours or less, 22 hours or less, or 20 hours or less.

According to an embodiment of the present invention, the second method (S2-2) may be performed at the fourth temperature for 2 hours to 30 hours. Specifically, the first firing may be performed for 5 hours or greater, 8 hours or greater, 11 hours or greater, 13 hours or greater, or 15 hours or greater, and may also be performed for 28 hours or less, 26 hours or less, 24 hours or less, 22 hours or less, or 20 hours or less.

The method for preparing a positive electrode active material according to an embodiment of the present invention may further include a step of (S3): further mixing a coating element raw material with the resulting product generated after step (S2) and firing the resulting product at a temperature of 200 °C to 900 °C at an oxygen partial pressure of 10 to 100%.

According to an embodiment of the present invention, when step (S2) is performed as the first method (S2-1), step (S3) may be performed by further mixing a coating element raw material with the second fired product of the first method (S2-1) and firing the product at a temperature of 200 °C to 900 °C at an oxygen partial pressure of 10 to 100%.

According to an embodiment of the present invention, when step (S2) is performed as the second method (S2-2), step (S3) may be performed by further mixing a coating element raw material with the continuously fired product of the second method (S2-2) and firing the product at a temperature of 200 °C to 900 °C at an oxygen partial pressure of 10 to 100%.

According to an embodiment of the present invention, the step (S3) may be performed for 1 hour to 20 hours. Specifically, the step (S3) may be performed for 2 hours or greater, 3 hours or greater, 4 hours or greater, 5 hours or greater, or 6 hours or greater, and may also be performed for 18 hours or less, 16 hours or less, 14 hours or less, 12 hours or less, or 10 hours or less.

According to an embodiment of the present invention, the coating element raw material may be at least one of the following forms: metal, hydroxide, oxide, carbonate, sulfate, sulfide, phosphate, nitrate, chloride, and acetate form selected from the group consisting of Li, Ni, Co, Mn, B, F, Mg, Al, Si, P, Ca, Sc, Ti, V, Cr, Fe, Ga, Sr, Y, Zr, Nb, Mo, Ba, La, Hf, Ta, W, Bi, Ce, Sm, and Gd.

### <Positive electrode>

According to an embodiment of the present invention, a positive electrode including the positive electrode material is provided.

Specifically, the positive electrode includes a positive electrode current collector, and a positive electrode active material layer formed on the positive electrode current collector and including the positive electrode active material.

According to an embodiment of the present invention, the positive electrode current collector is not particularly limited as long as it has conductivity without causing chemical changes in batteries. For example, stainless steel, aluminum, nickel, titanium, baked carbon, or aluminum or stainless steel that is surface-treated with one of carbon, nickel, titanium, silver, and the like may be used. In addition, the positive electrode current collector may typically have a thickness of 3 µm to 500 µm, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

In an embodiment of the present invention, the positive electrode active material layer may include a conductive material and a binder, in addition to the positive electrode active material described above.

According to an embodiment of the present invention, the conductive material is used to provide conductivity to an electrode, and any conductive material may be used without particular limitation as long as it has electron conductivity without causing chemical changes in batteries to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may typically be included in an amount of 0.3 to 30 wt% with respect to a total weight of the positive electrode active material layer.

According to an embodiment of the present invention, the binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene-butadiene rubber (SBR), fluorine rubber, or various copolymers thereof, and any one thereof or a mixture of two or more thereof may be used. The binder may be included in an amount of 0.3 to 30 wt% with respect to the total weight of the positive electrode active material layer.

According to an embodiment of the present invention, the positive electrode may be prepared according to a typical method of preparing a positive electrode except that the positive electrode active material described above is used. Specifically, a composition for forming a positive electrode active material layer, which is prepared by mixing or dispersing the positive electrode active material and optionally, a binder and a conductive material in a solvent, is applied onto the positive electrode current collector, and then dried and rolled to prepare the positive electrode. In this case, types and amounts of the positive electrode active material, the binder, and the conductive material are as described above.

According to an embodiment of the present invention, the solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The amount of the solvent to be used is sufficient if the solvent may dissolve or disperse the positive electrode active material, the conductive material, and the binder in consideration of the applying thickness of a slurry and preparation yield, and thereafter, have a viscosity which may exhibit excellent thickness uniformity during application for the preparation of a positive electrode.

In addition, in another method, the positive electrode may be prepared by casting a composition for forming the positive electrode material layer on a separate support and then laminating a film separated from the support on the positive electrode current collector.

### <Lithium secondary battery>

According to an embodiment of the present invention, an electrochemical device including the positive electrode is provided. The electrochemical device may be specifically a battery, a capacitor, or the like, and more specifically, may be a lithium secondary battery.

According to an embodiment of the present invention, the lithium secondary battery specifically includes a positive electrode, a negative electrode positioned to face the positive electrode, a separator sandwiched between the positive electrode and the negative electrode, and an electrolyte. The positive electrode is the same as that described above. In addition, the lithium secondary battery may selectively further include a battery case for accommodating an electrode assembly composed of the positive electrode, the negative electrode, and the separator, and a sealing member for sealing the battery case.

According to an embodiment of the present invention, in the lithium secondary battery, the negative electrode includes a negative electrode current collector and a negative electrode active material layer positioned on the negative electrode current collector.

According to an embodiment of the present invention, the negative electrode current collector is not particularly limited as long as it has a high conductivity without causing chemical changes in batteries, and for example, copper, stainless steel, aluminum, nickel, titanium, baked carbon, copper or stainless steel that is surface-treated with one of carbon, nickel, titanium, silver, and the like, an aluminum-cadmium alloy, and the like may be used. In addition, the negative electrode current collector may typically have a thickness of 3 µm to 500 µm, and as in the case of the positive electrode current collector, fine irregularities may be formed on a surface of the negative electrode current collector to improve the adhesion of a negative electrode active material. For example, the current collector may be used in various forms such as a film, a sheet, a foil, a net, a porous body, a foam body, and a non-woven fabric body.

According to an embodiment of the present invention, the negative electrode active material layer may optionally include a binder and a conductive material, in addition to the negative electrode active material.

According to an embodiment of the present invention, a compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and dedoped with lithium such as SiOₓ (0 < x < 2), SnO₂, vanadium oxide, and lithium vanadium oxide; or a composite including the metallic compound and the carbonaceous material such as a Si-C composite or a Sn-C composite, and any one thereof or a mixture of two or more thereof may be used. In addition, as the negative electrode active material, a lithium metal thin film may be used. In addition, as a carbon material, low-crystalline carbon, high-crystalline carbon, and the like may all be used. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

In addition, the binder and the conductive material may be the same as described above for the positive electrode.

According to an embodiment of the present invention, the negative electrode active material may be prepared by applying a composition for forming a negative electrode, which is prepared by dispersing a negative electrode active material and optionally a binder and a conductive material in a solvent, onto a negative electrode current collector, followed by drying, or may be prepared by casting the composition for forming a negative electrode on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. In addition, a coated separator including a ceramic component or a polymer material may be used to secure heat resistance or mechanical strength, and may be optionally used in a single-layered or a multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacture of a lithium secondary battery, but is not limited thereto.

Specifically, the electrolyte may include an organic solvent and a lithium salt.

According to an embodiment of the present invention, as the organic solvent, any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable. In this case, the electrolyte may exhibit excellent performance when the cyclic carbonate and the chain carbonate are mixed in a volume ratio of about 1:1 to about 1:9.

According to an embodiment of the present invention, any compound may be used as the lithium salt without particular limitation as long as it may provide lithium ions used in a lithium secondary battery. Specifically, as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be preferably used in a concentration range of 0.1 M to 2.0 M. When the concentration of the lithium salt is included within the above range, the electrolyte has suitable conductivity and viscosity and may thus exhibit excellent performance, and lithium ions may effectively move.

According to an embodiment of the present invention, in order to improve lifespan characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% with respect to a total weight of the electrolyte.

According to an embodiment of the present invention, the lithium secondary battery including the positive electrode active material according to the present invention as describe above stably exhibits excellent discharging capacity, output properties, and capacity retention, and thus, are useful for portable devices such as a mobile phone, a notebook computer, and a digital camera, and in the field of electric cars such as a hybrid electric vehicle (HEV).

Hereinafter, examples of the present invention will be described in detail in such a manner that it may easily be performed by a person with ordinary skill in the art to which the present invention pertains. The present invention may, however, be embodied in many different forms, and is not limited to examples set forth herein.

### Example 1

Raw materials were subjected to solid-state mixing to achieve Ni(OH)₂ (D₅₀: 5 µm), Co(OH)₂ (D₅₀: 0.3 µm), MnO₂ (D₅₀: 1 µm), and Al(OH)₃ (D₅₀: 1 µm) in a molar ratio of Ni:Co:Mn:Al of 88:3:8:1, LiOH·H₂O (a first lithium raw material) in a molar ratio of Li: (Ni+Co+Mn+Al) of 1.02:1, and Zr and Y in a weight ratio of 1500 ppm and 1000 ppm, respectively, with respect to a positive electrode active material based on theoretical yield, and the resulting mixture was fired at 890 °C for 6 hours (first firing) and then cooled to room temperature. Thereafter, LiOH·H₂O (a second lithium raw material) was additionally mixed with a resulting product from the first firing to achieve a molar ratio of Li: (Ni+Co+Mn+Al) was 1.04:1, and the resulting mixture was fired at 820 °C for 10 hours (second firing), and Co(OH)₂ and Al(OH)₃ were mixed with a resulting product from the second firing to achieve Co and Al in a weight ratio of 13,000 ppm and 500 ppm, respectively, with respect to the positive electrode active material based on theoretical yield, and the resulting mixture was heat-treated at 700 °C for 3 hours to prepare a positive electrode active material.

### Example 2

Raw materials were subjected to solid-state mixing to achieve Ni(OH)₂ (D₅₀: 5 µm), Co(OH)₂ (D₅₀: 0.3 µm), MnO₂ (D₅₀: 0.5 µm), and Al(OH)₃ (D₅₀: 1 µm) in a molar ratio of Ni:Co:Mn:Al of 88:3:8:1, LiOH·H₂O (a first lithium raw material) in a molar ratio of Li: (Ni+Co+Mn+Al) of 1.02:1, and Zr and Y in a weight ratio of 1500 ppm and 1000 ppm, respectively, with respect to a positive electrode active material based on theoretical yield, and the resulting mixture was fired at 890 °C for 6 hours (first firing) and then cooled to room temperature. Thereafter, LiOH·H₂O (a second lithium raw material) was additionally mixed with a resulting product from the first firing to achieve a molar ratio of Li: (Ni+Co+Mn+Al) was 1.04:1, and the resulting mixture was fired at 820 °C for 10 hours (second firing), and Co(OH)₂ and Al(OH)₃ were mixed with a resulting product from the second firing to achieve Co and Al in a weight ratio of 13,000 ppm and 500 ppm, respectively, with respect to the positive electrode active material based on theoretical yield, and the resulting mixture was heat-treated at 700 °C for 3 hours to prepare a positive electrode active material.

### Example 3

Raw materials were subjected to solid-state mixing to achieve Ni(OH)₂ (D₅₀: 4 µm), Co(OH)₂ (D₅₀: 0.3 µm), MnO₂ (D₅₀: 0.5 µm), and Al(OH)₃ (D₅₀: 1 µm) in a molar ratio of Ni:Co:Mn:Al of 88:3:8:1, LiOH·H₂O (a first lithium raw material) in a molar ratio of Li: (Ni+Co+Mn+Al) of 1.02:1, and Zr and Y in a weight ratio of 1500 ppm and 1000 ppm, respectively, with respect to a positive electrode active material based on theoretical yield, and the resulting mixture was fired at 890 °C for 6 hours (first firing) and then cooled to room temperature. Thereafter, LiOH·H₂O (a second lithium raw material) was additionally mixed with a resulting product from the first firing to achieve a molar ratio of Li: (Ni+Co+Mn+Al) was 1.04:1, and the resulting mixture was fired at 820 °C for 10 hours (second firing), and Co(OH)₂ and Al(OH)₃ were mixed with a resulting product from the second firing to achieve Co and Al in a weight ratio of 13,000 ppm and 500 ppm, respectively, with respect to the positive electrode active material based on theoretical yield, and the resulting mixture was heat-treated at 700 °C for 3 hours to prepare a positive electrode active material.

### Example 4

Raw materials were subjected to solid-state mixing to achieve Ni(OH)₂ (D₅₀: 3 µm), Co(OH)₂ (D₅₀: 0.3 µm), MnO₂ (D₅₀: 0.5 µm), and Al(OH)₃ (D₅₀: 1 µm) in a molar ratio of Ni:Co:Mn:Al of 88:3:8:1, LiOH·H₂O (a first lithium raw material) in a molar ratio of Li: (Ni+Co+Mn+Al) of 1.02:1, and Zr and Y in a weight ratio of 1500 ppm and 1000 ppm, respectively, with respect to a positive electrode active material based on theoretical yield, and the resulting mixture was fired at 890 °C for 6 hours (first firing) and then cooled to room temperature. Thereafter, LiOH·H₂O (a second lithium raw material) was additionally mixed with a resulting product from the first firing to achieve a molar ratio of Li: (Ni+Co+Mn+Al) was 1.04:1, and the resulting mixture was fired at 820 °C for 10 hours (second firing), and Co(OH)₂ and Al(OH)₃ were mixed with a resulting product from the second firing to achieve Co and Al in a weight ratio of 13,000 ppm and 500 ppm, respectively, with respect to the positive electrode active material based on theoretical yield, and the resulting mixture was heat-treated at 700 °C for 3 hours to prepare a positive electrode active material.

### Example 5

Raw materials were subjected to solid-state mixing to achieve Ni(OH)₂ (D₅₀: 3 µm), Co(OH)₂ (D₅₀: 0.3 µm), MnO₂ (D₅₀: 0.3 µm), and Al(OH)₃ (D₅₀: 1 µm) in a molar ratio of Ni:Co:Mn:Al of 88:3:8:1, LiOH (a first lithium raw material) in a molar ratio of Li: (Ni+Co+Mn+Al) of 1.03:1, and Zr and Y in a weight ratio of 1500 ppm and 1000 ppm, respectively, with respect to a positive electrode active material based on theoretical yield, and the resulting mixture was fired at 870 °C for 6 hours (first firing) and then cooled to room temperature. Thereafter, LiOH·(a second lithium raw material) was additionally mixed with a resulting product from the first firing to achieve a molar ratio of Li: (Ni+Co+Mn+Al) was 1.04:1, and the resulting mixture was fired at 820 °C for 10 hours (second firing), and Co(OH)₂ and Al(OH)₃ were mixed with a resulting product from the second firing to achieve Co and Al in a weight ratio of 13,000 ppm and 500 ppm, respectively, with respect to the positive electrode active material based on theoretical yield, and the resulting mixture was heat-treated at 700 °C for 3 hours to prepare a positive electrode active material.

### Example 6

Raw materials were subjected to solid-state mixing to achieve Ni(OH)₂ (D₅₀: 3 µm), Co₃O₄ (D₅₀: 0.5 µm), MnO₂ (D₅₀: 0.3 µm), and Al(OH)₃ (D₅₀: 1 µm) in a molar ratio of Ni:Co:Mn:Al of 88:3:8:1, LiOH·H₂O (a first lithium raw material) in a molar ratio of Li: (Ni+Co+Mn+Al) of 1.03:1, and Zr and Y in a weight ratio of 1500 ppm and 1000 ppm, respectively, with respect to a positive electrode active material based on theoretical yield, and the resulting mixture was fired at 870 °C for 6 hours (first firing) and then cooled to room temperature. Thereafter, LiOH·H₂O (a second lithium raw material) was additionally mixed with a resulting product from the first firing to achieve a molar ratio of Li: (Ni+Co+Mn+Al) was 1.04:1, and the resulting mixture was fired at 820 °C for 10 hours (second firing), and Co(OH)₂ and Al(OH)₃ were mixed with a resulting product from the second firing to achieve Co and Al in a weight ratio of 13,000 ppm and 500 ppm, respectively, with respect to the positive electrode active material based on theoretical yield, and the resulting mixture was heat-treated at 700 °C for 3 hours to prepare a positive electrode active material.

### Example 7

Raw materials were subjected to solid-state mixing to achieve Ni(OH)₂ (D₅₀: 3 µm), Co(OH)₂ (D₅₀: 0.3 µm), MnO₂ (D₅₀: 0.3 µm), and Al(OH)₃ (D₅₀: 1 µm) in a molar ratio of Ni:Co:Mn:Al of 88:3:8:1, LiOH·H₂O (a first lithium raw material) in a molar ratio of Li: (Ni+Co+Mn+Al) of 1.03:1, and Zr and Y in a weight ratio of 1500 ppm and 1000 ppm, respectively, with respect to a positive electrode active material based on theoretical yield, and the resulting mixture was fired at 885 °C for 6 hours (first firing) and then cooled to room temperature. Thereafter, LiOH·H₂O (a second lithium raw material) was additionally mixed with a resulting product from the first firing to achieve a molar ratio of Li: (Ni+Co+Mn+Al) of 1.04:1, and the resulting mixture was fired at 820 °C for 10 hours (second firing), and Co(OH)₂ and Al(OH)₃ were mixed with a resulting product from the second firing to achieve Co and Al in a weight ratio of 13,000 ppm and 500 ppm, respectively, with respect to the positive electrode active material based on theoretical yield, and the resulting mixture was heat-treated at 700 °C for 3 hours to prepare a positive electrode active material.

### Example 8

Raw materials were subjected to solid-state mixing to achieve Ni(OH)₂ (D₅₀: 3 µm), Co(OH)₂ (D₅₀: 0.3 µm), MnO₂ (D₅₀: 0.3 µm), and Al(OH)₃ (D₅₀: 1 µm) in a molar ratio of Ni:Co:Mn:Al of 88:3:8:1, LiOH·H₂O (a first lithium raw material) in a molar ratio of Li: (Ni+Co+Mn+Al) of 1.03:1, and Zr and Y in a weight ratio of 1500 ppm and 1000 ppm, respectively, with respect to a positive electrode active material based on theoretical yield, and the resulting mixture was fired at 885 °C for 6 hours (first firing) and then immediately fired continuously at 820 °C for 10 hours, and subsequently, Co(OH)₂ and Al(OH)₃ were mixed with a resulting product from the continuous firing to achieve Co and Al in a weight ratio of 13,000 ppm and 500 ppm, respectively, with respect to the positive electrode active material based on theoretical yield and the mixture was heat-treated at 700 °C for 3 hours to prepare a positive electrode active material.

### Example 9

Raw materials were subjected to solid-state mixing to achieve Ni(OH)₂ (D₅₀: 3 µm), Co(OH)₂ (D₅₀: 0.3 µm), MnO₂ (D₅₀: 0.3 µm), and Al(OH)₃ (D₅₀: 1 µm) in a molar ratio of Ni:Co:Mn:Al of 88:3:8:1, LiOH·H₂O (a first lithium raw material) in a molar ratio of Li: (Ni+Co+Mn+Al) of 1.03:1, and Zr and Y in a weight ratio of 1500 ppm and 1000 ppm, respectively, with respect to a positive electrode active material based on theoretical yield, and the resulting mixture was fired at 885 °C for 6 hours and then immediately fired continuously at 820 °C for 10 hours to prepare a positive electrode active material.

### Example 10

Raw materials were subjected to solid-state mixing to achieve Ni(OH)₂ (D₅₀: 4 µm), Co(OH)₂ (D₅₀: 0.3 µm), and Mn₃O₄ (D₅₀: 1 µm) in a molar ratio of Ni:Co:Mn of 60:10:30, Li₂CO₃ (a first lithium raw material) in a molar ratio of Li: (Ni+Co+Mn) of 1.03:1, and Zr and Y in a weight ratio of 2000 ppm and 1500 ppm, respectively, with respect to a positive electrode active material based on theoretical yield, and the resulting mixture was fired at 950 °C for 8 hours (first firing) and then cooled to room temperature. Thereafter, LiOH·H₂O (a second lithium raw material) was additionally mixed with a resulting product from the first firing to achieve a molar ratio of Li: (Ni+Co+Mn) of 1.05:1, and the resulting mixture was fired at 820 °C for 8 hours (second firing), and Al₂O₃ and WO₃ were mixed with a resulting product from the second firing to achieve Al and W in a weight ratio of 1500 ppm and 3000 ppm, respectively, with respect to the positive electrode active material based on theoretical yield, and the resulting mixture was heat-treated at 500 °C for 6 hours to prepare a positive electrode active material.

### Example 11

Raw materials were subjected to solid-state mixing to achieve Ni(OH)₂ (D₅₀: 4 µm), Co(OH)₂ (D₅₀: 0.3 µm), and MnO₂ (D₅₀: 1 um) in a molar ratio of Ni:Co:Mn of 60:10:30, Li₂CO₃ (a first lithium raw material) in a molar ratio of Li: (Ni+Co+Mn) of 1.03:1, and Zr and Y in a weight ratio of 2000 ppm and 1500 ppm, respectively, with respect to a positive electrode active material based on theoretical yield, and the resulting mixture was fired at 950 °C for 8 hours (first firing) and then cooled to room temperature. Thereafter, LiOH·H₂O (a second lithium raw material) was additionally mixed with a resulting product from the first firing to achieve a molar ratio of Li: (Ni+Co+Mn) of 1.05:1, and the resulting mixture was fired at 820 °C for 8 hours (second firing), and Al₂O₃ and WO₃ were mixed with a resulting product from the second firing to achieve Al and W in a weight ratio of 1500 ppm and 3000 ppm, respectively, with respect to the positive electrode active material based on theoretical yield, and the resulting mixture was heat-treated at 500 °C for 6 hours to prepare a positive electrode active material.

### Example 12

Raw materials were subjected to solid-state mixing to achieve Ni(OH)₂ (D₅₀: 4 µm), Co(OH)₂ (D₅₀: 0.3 µm), and Mn₃O₄ (D₅₀: 1 µm) in a molar ratio of Ni:Co:Mn of 60:10:30, Li₂CO₃ (a first lithium raw material) in a molar ratio of Li: (Ni+Co+Mn) of 1.03:1, and Zr and Y in a weight ratio of 2000 ppm and 1500 ppm, respectively, with respect to a positive electrode active material based on theoretical yield, and the resulting mixture was fired at 950 °C for 8 hours (first firing) and then cooled to room temperature. Thereafter, LiOH·H₂O (a second lithium raw material) was additionally mixed with a resulting product from the first firing to achieve a molar ratio of Li: (Ni+Co+Mn) of 1.05:1, and the resulting mixture was fired at 760 °C for 8 hours (second firing), and Al₂O₃ and WO₃ were mixed with a resulting product from the second firing to achieve Al and W in a weight ratio of 1500 ppm and 3000 ppm, respectively, with respect to the positive electrode active material based on theoretical yield, and the resulting mixture was heat-treated at 500 °C for 6 hours to prepare a positive electrode active material.

### Example 13

Raw materials were subjected to solid-state mixing to achieve Ni(OH)₂ (D₅₀: 4 µm), Co(OH)₂ (D₅₀: 0.3 µm), and Mn₃O₄ (D₅₀: 1 µm) in a molar ratio of Ni:Co:Mn of 60:10:30, Li₂CO₃ (a first lithium raw material) in a molar ratio of Li: (Ni+Co+Mn) of 1.03:1, and Zr and Y in a weight ratio of 2000 ppm and 1500 ppm, respectively, with respect to a positive electrode active material based on theoretical yield, and the resulting mixture was fired at 850 °C for 5 hours (first firing) and then immediately fired continuously at 950 °C for 10 hours, and subsequently, Al₂O₃ and WO₃ were mixed with a resulting product from the continuous firing to achieve Al and W in a weight ratio of 1500 ppm and 3000 ppm, respectively, with respect to the positive electrode active material based on theoretical yield and the mixture was heat-treated at 500 °C for 6 hours to prepare a positive electrode active material.

### Comparative Example 1

An NCM(OH)₂ precursor having a composition that a molar ratio of Ni:Co:Mn was 89:3:8 was prepared through coprecipitation and mixed with Al(OH)₃ (D₅₀: 1 µm) to achieve a molar ratio of Ni:Co:Mn:Al of 88:3:8:1, LiOH·H₂O in a molar ratio of Li: (Ni+Co+Mn+Al) of 1.03:1, and Zr and Y in a weight ratio of 1500 ppm and 1000 ppm, respectively, with respect to a positive electrode material based on theoretical yield so as to mix raw materials, and the resulting mixture was fired at 870 °C for 6 hours (first firing) and then cooled to room temperature. Thereafter, LiOH·H₂O was additionally mixed with a resulting product from the first firing to achieve a molar ratio of Li: (Ni+Co+Mn+Al) of 1.04:1, and the resulting mixture was fired at 820 °C for 10 hours (second firing), and Co(OH)₂ and Al(OH)₃ were mixed with a resulting product from the second firing to achieve Co and Al in a weight ratio of 13,000 ppm and 500 ppm, respectively, with respect to the positive electrode active material based on theoretical yield, and the resulting mixture was heat-treated at 700 °C for 3 hours to prepare a positive electrode active material.

### Comparative Example 2

An NCM(OH)₂ precursor having a composition that a molar ratio of Ni:Co:Mn was 89:3:8 was prepared through coprecipitation and mixed with Al(OH)₃ (D₅₀: 1 µm) to achieve a molar ratio of Ni:Co:Mn:Al of 88:3:8:1, LiOH·H₂O in a molar ratio of Li: (Ni+Co+Mn+Al) of 1.03:1, and Zr and Y in a weight ratio of 1500 ppm and 1000 ppm, respectively, with respect to a positive electrode material based on theoretical yield so as to mix raw materials, and the resulting mixture was fired at 885 °C for 6 hours (first firing) and then LiOH·H₂O was additionally mixed with a resulting product from the first firing to achieve a molar ratio of Li: (Ni+Co+Mn+Al) of 1.04:1 and the resulting mixture was fired at 820 °C for 10 hours (second firing), and Co(OH)₂ and Al(OH)₃ were mixed with a resulting product from the second firing to achieve Co and Al in a weight ratio of 13,000 ppm and 500 ppm, respectively, with respect to the positive electrode active material based on theoretical yield, and the resulting mixture was heat-treated at 700 °C for 3 hours to prepare a positive electrode active material.

### Comparative Example 3

An NCM(OH)₂ precursor having a composition that a molar ratio of Ni:Co:Mn was 89:3:8 was prepared through coprecipitation and mixed with Al(OH)₃ (D₅₀: 1 µm) to achieve a molar ratio of Ni:Co:Mn:Al of 88:3:8:1, LiOH·H₂O in a molar ratio of Li: (Ni+Co+Mn+Al) of 1.03:1, and Zr and Y in a weight ratio of 1500 ppm and 1000 ppm, respectively, with respect to a positive electrode material based on theoretical yield so as to mix raw materials, and the resulting mixture was fired at 885 °C for 6 hours (first firing) and then LiOH·H₂O was additionally mixed with a resulting product from the first firing to achieve a molar ratio of Li: (Ni+Co+Mn+Al) of 1.04:1 and the resulting mixture was fired at 820 °C for 10 hours to prepare a positive electrode material.

### Comparative Example 4

An NCM(OH)₂ precursor having a composition that a molar ratio of Ni:Co:Mn was 60:10:30 was prepared through coprecipitation, and then raw materials were mixed to achieve Li₂CO₃ in a molar ratio of Li: (Ni+Co+Mn) of 1.03:1, and Zr and Y in a weight ratio of 2000 ppm and 1500 ppm, respectively, with respect to a positive electrode material based on theoretical yield, and the resulting mixture was fired at 950 °C for 8 hours (first firing) and then LiOH·H₂O was additionally mixed with a resulting product from the first firing to achieve a molar ratio of Li: (Ni+Co+Mn) of 1.05:1 and the resulting mixture was fired at 820 °C for 8 hours (second firing), and Al₂O₃ and WO₃ were mixed with a resulting product from the second firing to achieve Al and W in a weight ratio of 1500 ppm and 3000 ppm, respectively, with respect to the positive electrode active material based on theoretical yield, and the resulting mixture was heat-treated at 500 °C for 6 hours to prepare a positive electrode active material.

### Experimental Examples

### Experimental Example 1: Analysis of EPMA images

### <EPMA Mn concentration scale bar setting>

For each of the positive electrode active materials from Examples and Comparative Examples, Mn mol% was obtained using an inductively coupled plasma optical emission spectrometer (ICP-OES; PerkinElmer, Optima 8000DV). The Mn mol% value of each of the positive electrode active materials from Examples and Comparative Examples was set as a maximum value, and the Mn mol% of each of the positive electrode active materials from Examples and Comparative Examples, divided by 3 and discarding the fractional part from the first decimal place was set as a minimum value to set EPMA Mn concentration scale bar.

Specifically, as for Examples 1 to 9 and Comparative Examples 1 to 3, each having a Mn mol% of 8 in ICP analysis, the EPMA Mn concentration scale bar is set with a maximum value (max) of 8 concentration % and a minimum value (min) of 2 concentration % (8/3 = 2.666..). In addition, as for Examples 10 to 13 and Comparative Example 4, each having a Mn mol% of 30 in ICP analysis, the EPMA Mn concentration scale bar is set with a maximum value (max) of 30 concentration % and a minimum value (min) of 10 concentration %.

### <EPMA Analysis>

A positive electrode slurry was prepared by mixing each of the positive electrode active material from Exampled and Comparative Examples, a carbon black conductive material, and a PVDF binder in an N-methylpyrrolidone (NMP) solvent at a weight ratio of 95:2:3. The above-prepared positive electrode slurry was applied onto one surface of an aluminum current collector, dried at 130 °C, and then rolled such that electrode porosity was 20% to prepare a positive electrode.

In order to create a flat cross-section for EPMA cross-sectional analysis, the positive electrode was Ar-ion milled at an acceleration voltage of 6 kV using HITACHI IM-5000 equipment to obtain a cross-section of a positive electrode sample, and then a cross-sectional image of the positive electrode sample was observed using JEOL JXA-iHP200F equipment at an acceleration voltage of 15 kV and a probe current of 50 nA. Mn content extraction from the EPMA image was performed using an analysis-intensity function of PC-EPMA software from JEOL. In this case, the region of interest (ROI) for composition extraction was set as a rectangular area as large as possible in particles from which the content was to be extracted.

### Experimental Example 2: Evaluation of battery characteristics (Examples 1-9, Comparative Examples 1-3)

Each of the positive electrode active materials from Example 1 to 9 and Comparative Examples 1 to 3, a carbon black conductive material, and a PVDF binder were mixed in an N-methylpyrrolidone solvent at a weight ratio of 95:2:3 to prepare a positive electrode material mixture, and the mixture was applied onto one surface of an aluminum current collector, dried at 130 °C, and then rolled to prepare a positive electrode having a porosity of 20%.

An electrode assembly was prepared by using a lithium metal electrode as a negative electrode and placing a porous polyethylene separator between the positive electrode prepared as described above and the negative electrode. The electrode assembly was placed inside a case, and an electrolyte containing 1.0 M lithium hexafluorophosphate (LiPF₆) dissolved in an organic solvent consisting of ethylene carbonate, ethyl methyl carbonate, and diethyl carbonate (mixed volume ratio of EC/EMC/DEC = 3/4/3) was injected to manufacture a coin-type half-cell.

Each lithium secondary battery coin-type half-cell manufactured as described above was charged up to 4.25 V at 25 °C in CCCV mode at 0.1 C and maintained at 4.25 V up to A of 0.01 C. Thereafter, each lithium secondary battery was discharged up to 2.5 V at a constant current of 0.1 C to measure charge capacity and discharge capacity for a charge/discharge experiment, and the results are shown in Table 1 below. In addition, each lithium secondary battery was charged up to 4.25 V at 0.5 C at 45 °C and discharged up to 2.5 V at a constant current of 1.0 C to measure lifespan retention and resistance increase rate for 50 times of charge/discharge experiments, and the results are shown in Table 1 below.

### Experimental Example 3: Evaluation of battery characteristics (Examples 10-13, Comparative Example 4)

Each of the positive electrode materials prepared in Examples 10 to 13 and Comparative Example 4, a carbon black conductive material, and a PVDF binder were mixed in an N-methylpyrrolidone solvent at a weight ratio of 95:2:3 to prepare a positive electrode material mixture, and the mixture was applied onto one surface of an aluminum current collector, dried at 130 °C, and then rolled to prepare a positive electrode having a porosity of 20%.

An electrode assembly was prepared by using a lithium metal electrode as a negative electrode and placing a porous polyethylene separator between the positive electrode prepared as described above and the negative electrode. The electrode assembly was placed inside a case, and an electrolyte containing 1.0 M lithium hexafluorophosphate (LiPF₆) dissolved in an organic solvent consisting of ethylene carbonate, ethyl methyl carbonate, and diethyl carbonate (mixed volume ratio of EC/EMC/DEC = 3/4/3) was injected to manufacture a coin-type half-cell.

In Examples 10 to 13 and Comparative Example 4, each lithium secondary battery coin-type half-cell manufactured as described above was charged up to 4.4 V at 25 °C in CCCV mode at 0.1 C and maintained at 4.4 V up to A of 0.01 C. Thereafter, each lithium secondary battery was discharged up to 2.5 V at a constant current of 0.1 C to measure charge capacity and discharge capacity for a charge/discharge experiment, and the results are shown in Table 2 below.

Each of the positive electrode materials prepared in Examples 10 to 13 and Comparative Example 4, a carbon black conductive material, and a PVDF binder were mixed in an N-methylpyrrolidone solvent at a weight ratio of 95:2:3 to prepare a positive electrode material mixture, and the mixture was applied onto one surface of an aluminum current collector, dried at 130 °C, and then rolled to prepare a positive electrode having a porosity of 20%. Natural graphite and artificial graphite were mixed in a ratio of 5:5 to prepare a negative electrode as a counter electrode. 0.7 M salt was used as an electrolyte, and lithium bis(fluorosulfonyl)imide (LiFSI, 0.3 M) was added to retain lifespan. A volume of 100 uL of electrolyte was added per electrode, and an in-house separator was placed between the positive electrode and the negative electrode, in an appropriate size. The electrolyte was added to the prepared monocell and subjected to formation charge and discharge, and an initial gas was removed to evaluate the monocell.

High-temperature lifespan characteristics were determined by charging the monocell up to 4.35 V at a constant current of 0.33 C at 45 °C, discharging the monocell up to 2.5 V at a constant current of 0.33 C, and measuring capacity retention and resistance increase rate at 100th cycles, and the results are shown in Table 2 below.

**[Table 1]**

| | No. of observed high Mn concentration regions | 25 °C 0.1/0.1 C CHC | | | | 45 °C 0.5/1.0 C CHC | |
|---|---|---|---|---|---|---|---|
| | | Charge (mAh/g) | Discharge (mAh/g) | Efficiency (%) | Resistance (Ω) | Life retention at 50th cycles (%) | Resistance increase at 50th cycles (%) |
| Example 1 | 31 | 231.7 | 206.3 | 89.0 | 18.2 | 96.8 | 146.9 |
| Example 2 | 17 | 232.1 | 206.6 | 89.0 | 18.3 | 96.7 | 143.3 |
| Example 3 | 10 | 232.1 | 206.1 | 88.8 | 18.0 | 96.8 | 141.8 |
| Example 4 | 5 | 231.7 | 207.0 | 89.3 | 17.8 | 96.7 | 142.9 |
| Example 5 | 2 | 232.0 | 207.8 | 89.6 | 17.7 | 97.2 | 140.5 |
| Example 6 | 5 | 231.8 | 208.3 | 89.9 | 17.1 | 97.4 | 138.5 |
| Example 7 | 1 | 231.4 | 206.3 | 89.2 | 18.4 | 97.3 | 137.9 |
| Example 8 | 25 | 231.5 | 207.1 | 89.5 | 16.8 | 96.9 | 143.9 |
| Example 9 | 11 | 230.5 | 201.2 | 87.3 | 22.3 | 94.0 | 160.8 |
| Comparative Example 1 | - | 231.4 | 206.8 | 89.4 | 17.3 | 96.0 | 157.5 |
| Comparative Example 2 | - | 231.4 | 206.8 | 89.4 | 16.4 | 95.8 | 158.0 |
| Comparative Example 3 | - | 230.3 | 201.0 | 89.3 | 23.0 | 93.2 | 175.8 |
| * Maximum Mn concentration observed in Comparative Example 1: 4.16 concentration % | | | | | | | |
| * Maximum Mn concentration observed in Comparative Example 2: 4.44 concentration % | | | | | | | |
| * Maximum Mn concentration observed in Comparative Example 3: 4.29 concentration % | | | | | | | |

**[Table 2]**

| | No. of observed high Mn concen tration regions | 25 °C 0.1/0.1 C CHC | | | | 45 °C 0.33/0.33 C MC | |
|---|---|---|---|---|---|---|---|
| | | Charge (mAh/g) | Discharge (mAh/g) | Efficiency (%) | Resistance (Ω) | Life retention at 100th cycles (%) | Resistance increase at 100th cycles (%) |
| Example 10 | 7 | 215.9 | 195.0 | 90.3 | 21.8 | 95.6 | 32.3 |
| Example 11 | 9 | 216.2 | 194.9 | 90.2 | 22.2 | 95.5 | 27.4 |
| Example 12 | 13 | 216.0 | 196.6 | 91.0 | 22.0 | 95.7 | 30.4 |
| Example 13 | 16 | 216.0 | 196.5 | 91.0 | 22.6 | 95.9 | 29.5 |
| Compara tive Example 4 | - | 216.0 | 196.0 | 90.7 | 22.4 | 95.5 | 40.9 |
| * Maximum Mn concentration observed in Comparative Example 4: 17.1 concentration % | | | | | | | |

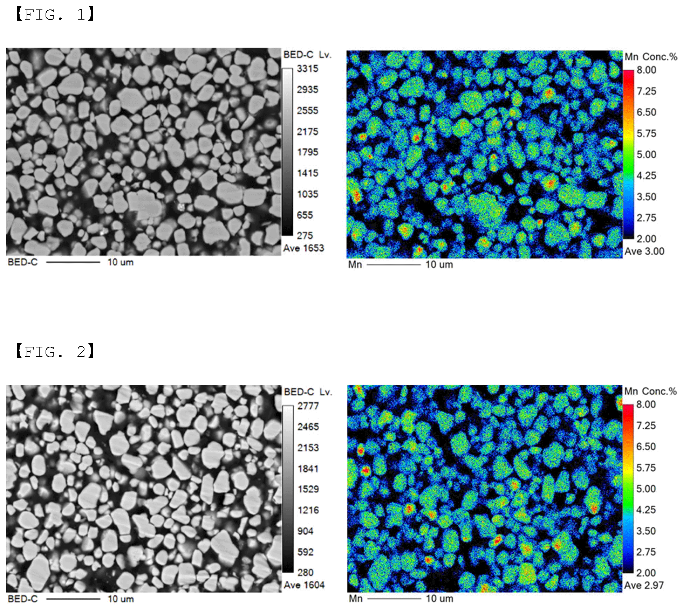

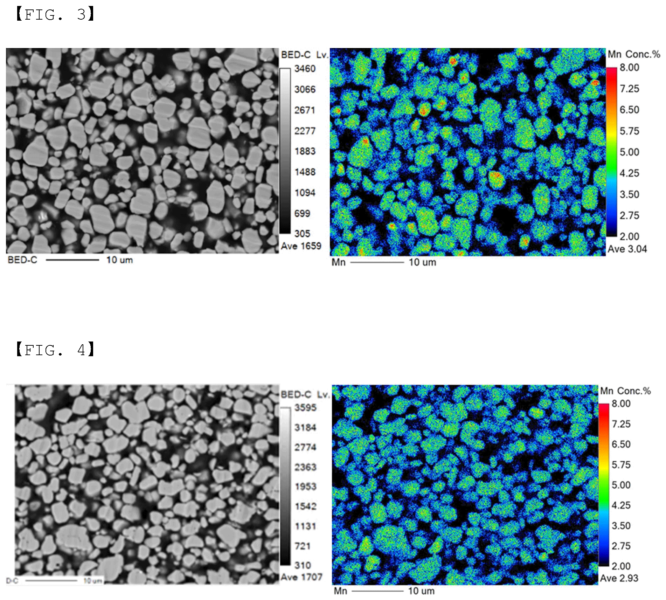

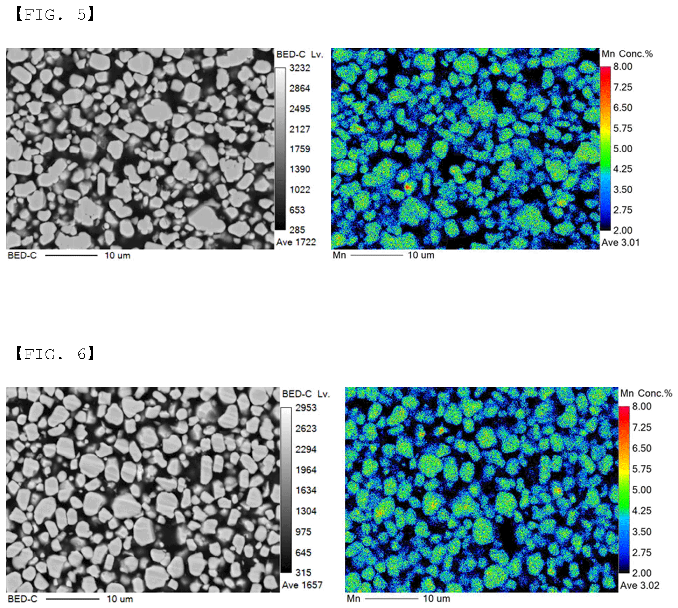

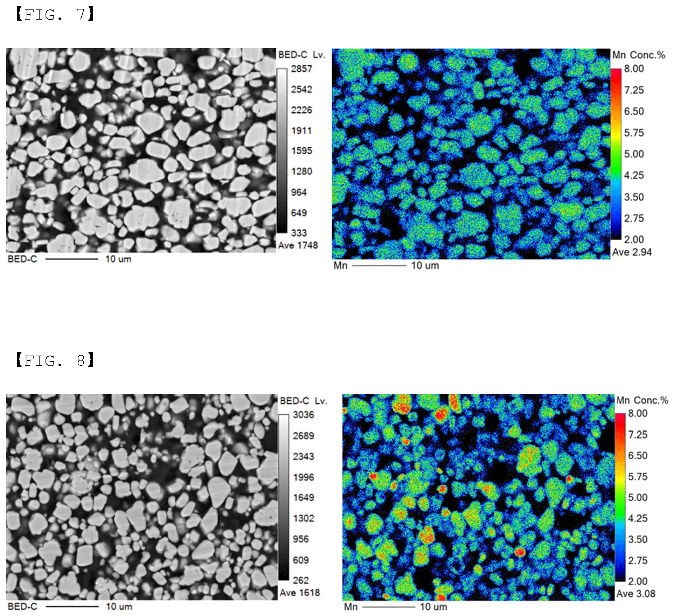

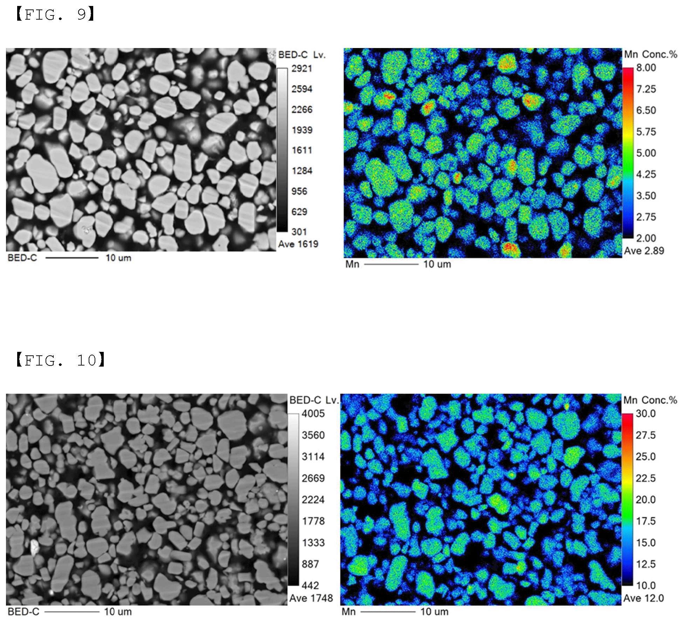

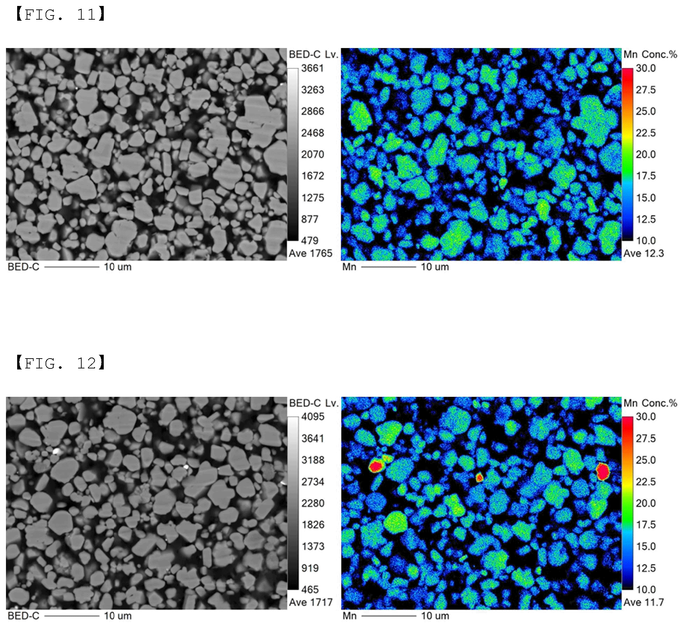

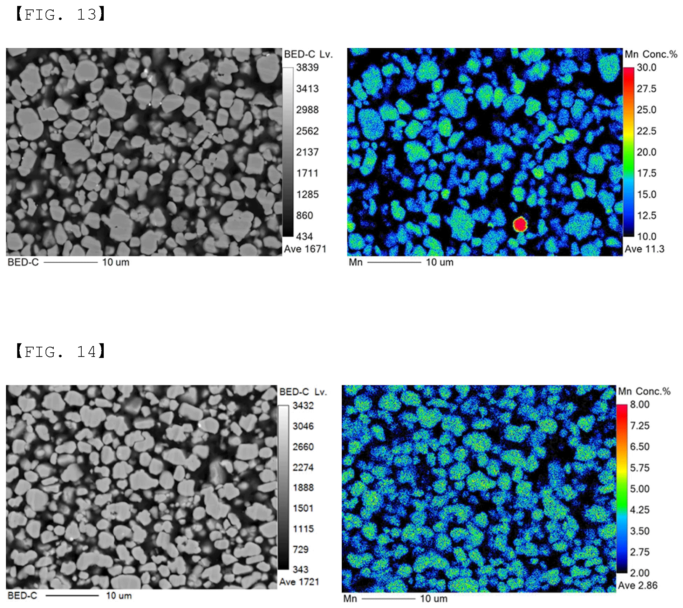

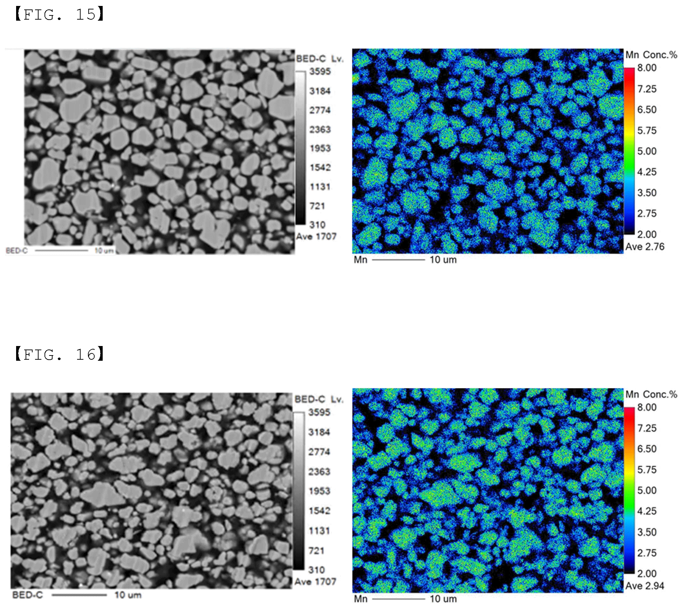

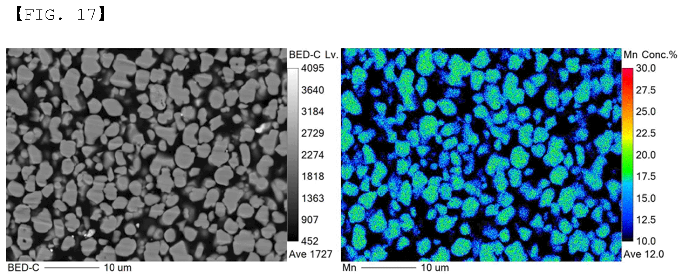

Referring to Tables 1 and 2 and FIGS. 1 to 17, it is determined that a region of high Mn concentration was observed in a cross-sections of the positive electrode active materials from Examples 1 to 13, and that a region of high Mn concentration was not observed in a cross-sections of the positive electrode active materials from Comparative Examples 1 to 4.

Specifically, it is determined that in Examples 1 to 9 having a Mn mol% of 8 in ICP analysis, a region of high Mn concentration exceeding 5 concentration %, which is the point where the maximum value (max; 8 concentration %) and the minimum value (min; 2 concentration %) of the set EPMA Mn concentration scale bar were internally divided in a ratio of 1:1, was observed, but in Comparative Examples 1 to 3, a region of high Mn concentration was not observed because the observed maximum value of Mn concentration did not exceed 5 concentration %.

In addition, it is determined that in Examples 10 to 13 having a Mn mol% of 30 in ICP analysis, a region of high Mn concentration exceeding 20 concentration %, which is the point where the maximum value (max; 8 concentration %) and the minimum value (min; 10 concentration %) of the set EPMA Mn concentration scale bar were internally divided in a ratio of 1:1, was observed, but in Comparative Example 4, a region of high Mn concentration was not observed because the observed maximum value of Mn concentration did not exceed 20 concentration %.

It is determined that Examples 1 to 8 having surface treatment conducted, having a Mn mol% of 8 measured by ICP for the positive electrode active material, and having a region of high Mn concentration observed exhibited greater lifespan retention and less resistance increase rate than Comparative Examples 1 and 2 having surface treatment conducted, having a Mn mol% of 8 measured by ICP for the positive electrode active material, and having no presence of a region of high Mn concentration.

In addition, it is determined that Example 9 having no surface treatment, having a Mn mol% of 8 measured by ICP for the positive electrode active material, and having a region of high Mn concentration observed exhibited greater lifespan retention and less resistance increase rate than Comparative Example 3 having no surface treatment, having a Mn mol% of 8 measured by ICP for the positive electrode active material, and having no presence of a region of high Mn concentration.

In addition, it is determined that Examples 10 to 13 having surface treatment conducted, having a Mn mol% of 30 measured by ICP for the positive electrode active material, and having a region of high Mn concentration observed exhibited greater lifespan retention and less resistance increase rate than Comparative Example 4 having surface treatment conducted, having a Mn mol% of 30 measured by ICP for the positive electrode active material, and having no presence of a region of high Mn concentration.

## Claims

1. A positive electrode material comprising a positive electrode active material in the form of a single particle,
wherein when a cross-section of a positive electrode comprising the positive electrode material is measured by EPMA under conditions of an acceleration voltage of 15 kV and a probe current of 50 nA, a region of high Mn concentration present on a cross-section of the positive electrode active material is observed in an EPMA image,
the region of high Mn concentration is, under the following conditions:
a maximum value (max) of a Mn concentration scale bar in the EPMA image is set to a Mn mol% value of the positive electrode active material analyzed by inductive coupled plasma (ICP); and
a minimum value (min) of a Mn concentration scale bar in the EPMA image is set to a value derived from Mn mol% of the positive electrode active material analyzed by ICP, divided by 3 and discarding the fractional part from the first decimal place,
defined as a region exhibiting Mn concentration % at or above a point where the maximum value (max) and the minimum value (min) are internally divided in a ratio of 1:1 with respect to the Mn concentration scale bar in the EPMA image.

2. The positive electrode material of claim 1, wherein the region of high Mn concentration has an area ratio of 1/100 or greater compared to a cross-sectional area of one positive electrode active material particle in which the region of high Mn concentration is observed.

3. The positive electrode material of claim 1, wherein the region of high Mn concentration is distributed on a surface and/or in the interior of the positive electrode active material.

4. The positive electrode material of claim 1, wherein the region of high Mn concentration is distributed in the interior of the positive electrode active material.

5. The positive electrode material of claim 1, wherein the positive electrode active material has an average particle size (D₅₀) of 1 µm to 15 µm.

6. The positive electrode material of claim 1, wherein the positive electrode active material comprises a lithium composite transition metal oxide represented by Formula 1 below:
[Formula 1] Li_{w}NiₓCo_{y}Mn_{z}M¹_{1-x-y-z}O₂
wherein in Formula 1 above, M¹ is at least one selected from the group consisting of B, F, Mg, Si, P, Ca, Sc, Ti, V, Cr, Fe, Ga, Sr, Y, Zr, Nb, Mo, Ba, La, Hf, Ta, W, Bi, Ce, Sm, and Gd, and
w, x, y, and z satisfy 0.8≤w≤1.2, 0.5≤x<1.0, 0≤y≤0.2, and 0<z≤0.4.

7. The positive electrode material of claim 1, wherein the positive electrode active material comprises a lithium composite transition metal oxide represented by Formula 2 below:
[Formula 2] LiₐNi_{b}Co_{c}Mn_{d}AlₑM²_{f}O₂
wherein in Formula 2 above, M² is at least one selected from the group consisting of B, F, Mg, Si, P, Ca, Sc, Ti, V, Cr, Fe, Ga, Sr, Y, Zr, Nb, Mo, Ba, La, Hf, Ta, W, Bi, Ce, Sm, and Gd, and
a, b, c, d, e, and f satisfy 0.8≤a≤1.2, 0.5≤b<1.0, 0≤c≤0.2, 0<d≤0.4, 0≤e≤0.1, 0≤f≤0.1, and b+c+d+e+f = 1.
